# EUROPEAN PATENT SPECIFICATION

(11) **EP 3 723 404 B1**
(45) Date of publication and mention of the grant of the patent: **31.07.2024**
(21) Application number: 17935523.5
(22) Date of filing: 22.12.2017
(51) Int. Cl.: H04W 24/02, H04W 16/14

(54) **UNLICENSED CARRIER PROCESSING METHOD, DEVICE, AND SYSTEM**
VERFAHREN, VORRICHTUNG UND SYSTEM ZUR UNLIZENZIERTEN TRÄGERVERARBEITUNG
PROCÉDÉ, DISPOSITIF ET SYSTÈME DE TRAITEMENT DE PORTEUSE SANS LICENCE

(43) Date of publication of application: 14.10.2020
(73) Proprietor: HUAWEI TECHNOLOGIES CO., LTD., Shenzhen, Guangdong 518129 (CN)
(72) Inventor: YOU, Yanzhen, Shenzhen, Guangdong 518129 (CN); ZENG, Lijun, Shenzhen, Guangdong 518129 (CN)
(74) Representative: Maiwald GmbH
(86) International application number: PCT/CN2017/118022
(87) International publication number: WO 2019/119424

(56) References cited:
- WO-A1-2015/100599
- WO-A1-2017/070635
- WO-A1-2017/176190
- WO-A1-2017/202300
- CN-A- 106 034 364
- CN-A- 106 658 566
- CN-A- 106 658 721
- CN-A- 106 664 697
- CN-A- 107 135 512
- US-A1- 2015 245 307
- US-A1- 2016 337 176

## Description

### TECHNICAL FIELD

Embodiments of this application relate to the communications field, and in particular, to an unlicensed carrier processing method, apparatus, and system.

### BACKGROUND

Lampsite (Lampsite) is an indoor coverage solution. The LampSite mainly focuses on indoor coverage of mobile broadband data. Through digitalization of the indoor coverage, indoor coverage construction and maintenance costs are greatly reduced, and promotion of mobile broadband experience is facilitated.

With the rapid development of the mobile communications market, a user increasingly wants to access a high-quality communications network whenever and wherever possible. Therefore, a mobile communications service provider begins to dispose repeaters in dead zones in which radio waves can hardly cover, for example, outdoors, inside buildings, and underground, to furthest meet a requirement of the user for a call service. An integrated access system implemented based on the LampSite is a dedicated distributed system architecture for supporting multiple standards and multiple frequency bands.

The current integrated access system may implement indoor co-construction and sharing. A convergence node opens an interconnection interface across base band units (Base Band Unit, BBU), so that the BBU accesses the convergence node, thereby implementing co-construction and sharing performed by multiple operators by using different BBUs. In the prior art, the convergence node may be configured to manage a resource of a licensed (Licensed) carrier, and different operators may use licensed carriers allocated to the operators, so that licensed frequencies used between the operators are mutually independent.

In the current integrated access system, there is no solution of how to use an unlicensed (Unlicensed) carrier. If the unlicensed carrier and the licensed carrier use a same multi-operator sharing solution, unlicensed frequencies used between the operators are mutually constrained. Because frequencies of the unlicensed carrier are shared and an interference status dynamically changes, if multiple operators need to share the frequencies of the unlicensed carrier, different operators may select frequencies of a same unlicensed carrier, causing strong interference. Consequently, spectrum utilization of the unlicensed carrier is reduced.

US2016/337176 A1 describes configuration of a secondary cellular network node for a secondary serving cell associated with a primary serving cell in a carrier aggregation enabled communications network. It is described that the secondary cellular network node receives an indication from a primary cellular network node associated with the primary serving cell to start scanning an unlicensed frequency band for deployment of the secondary serving cell. It is described that the secondary cellular network node scans at least one unlicensed frequency band to determine whether or not interference from transmitting interferers is present in the at least one unlicensed frequency band. It is described that the secondary cellular network node determines, based on the scanning, at least one frequency interval of the at least one unlicensed frequency band substantially free from the transmitting interferers, and that the secondary cellular network node transmits first configuration information of the at least one frequency interval to the primary cellular network node. It is described that the secondary cellular network node deploys the secondary serving cell by configuring the secondary cellular network node for transmission in one of the at least one frequency interval according to second configuration information being based on the first configuration information.

WO2017/070635 A1 describes a distributed radio frequency communication system facilitates communication between wireless terminals and a core network. It is described that the system includes a group of remote radio units (RRUs). Each RRU of the group of RRUs is coupled to an antenna to communicate with at least some of the mobile terminals and includes electronic circuitry to perform at least a first portion of a first-level protocol of a radio access network (RAN) and communicate over a fronthaul link. It is described that the system also includes a baseband unit (BBU) coupled to the core network and the fronthaul link, and communicably coupled to the group of RRUs over the fronthaul link, and that the BBU includes electronic circuitry to assign one or more RRUs, selected from the group of RRUs, to a cluster of RRUs based on one or more parameters, and to perform at least a second-level protocol of the RAN..

WO2017/202300 A1 describes a method for control-plane and user-plane transmissions in a customized C-RAN. It is described that the method includes providing control-plane (CP) signaling using a first beam in a radio resource, and providing user-plane (UP) content using a second beam in the radio resource based on the CP signaling, wherein the first beam provides wider access coverage than the second beam, the radio resource is a licensed band or an unlicensed band, the first beam and the second beam are millimeter-wave beams, the first beam has an omni-directional beam pattern, and the second beam has a directional beam pattern.

US2015/245307A1 describes methods, systems, and devices for uplink synchronization for physical uplink control channel (PUCCH) enabled secondary cells (SCells). It is described that a UE may be able to determine that synchronization with a PUCCH-enabled SCell ("PUCCH-SCell") is lost and to initiate synchronization. It is described that additionally or alternatively, a base station may be configured to expediently determine that a UE has lost synchronization with a PUCCH SCell, and it may initiate synchronization. It is described that either a UE or a base station, or both, may be configured to initiate synchronization depending on a particular carrier aggregation or dual-connectivity may be configured to determine that synchronization has been lost and initiate re-synchronization. It is described that initiating a synchronization procedure may include a base station sending a PDCCH order on a PUCCH SCell, or a UE sending a random access preamble or an unsynchronization alert message on a PUCCH SCell.

### SUMMARY

Embodiments of this application provide an unlicensed carrier processing method, apparatus, and system, to implement co-construction and sharing of an unlicensed carrier, and improve spectrum utilization of the unlicensed carrier.

Claim 1 defines an unlicensed carrier processing methods. Claim 5 defines a convergence node. Claim 6 defines a computer-readable storage medium. Claim 7 defines a computer program product. The invention and its scope of protection is defined by these independent claims. The following aspects and implementations of the disclosure provide exmples of how technical subject matters can be combined.

According to a first aspect, an embodiment of this application provides an unlicensed carrier processing method, including: deploying, by a convergence node, a first secondary cell using a first unlicensed carrier; generating, by the convergence node, frequency information of the first secondary cell based on frequency interference information measured by a pico remote radio unit pRRU, where the frequency information includes a first frequency that corresponds to the first unlicensed carrier and that is selected by the convergence node for the first secondary cell; and sending, by the convergence node, cell information of the first secondary cell to a base band unit BBU, where the cell information includes the frequency information of the first secondary cell, and the BBU corresponds to a target primary cell using a licensed carrier. In this embodiment of this application, a secondary cell using an unlicensed carrier is deployed on the convergence node, and the convergence node may uniformly plan frequencies of the secondary cell, so that a constraint performed by the pRRU on an instantaneous operating bandwidth may be met. In this embodiment of this application, a deployment location of the unlicensed carrier is disposed on the convergence node, so that the secondary cell using the unlicensed carrier may be used as a public resource to implement co-construction and sharing between operators, thereby improving spectrum utilization of the unlicensed carrier.

In a possible design of the first aspect, the generating, by the convergence node, frequency information of the first secondary cell based on frequency interference information measured by a pico remote radio unit pRRU includes: generating, by the convergence node, the frequency information of the first secondary cell based on the frequency interference information measured by the pRRU, a topological relationship between pRRUs, and a mapping relationship between the pRRUs and cells, where the cell includes the first secondary cell and the target primary cell. The convergence node may further select an optimal frequency for the first secondary cell as the first frequency based on the frequency interference information measured by the pRRU, the topological relationship between the pRRUs, and the mapping relationship between the pRRUs and the cells, where the optimal frequency may be a frequency of which an interference value and a quantity of frequencies in a coverage area of the target primary cell meet a requirement.

In a possible design of the first aspect, the generating, by the convergence node, the frequency information of the first secondary cell based on the frequency interference information measured by the pRRU, a topological relationship between pRRUs, and a mapping relationship between the pRRUs and cells includes: receiving, by the convergence node, frequency measurement results respectively reported by M pRRUs, where the frequency measurement results are information generated after each pRRU performs interference measurement on N frequencies, and M and N are positive integers; selecting, by the convergence node from the N frequencies, based on the frequency measurement results, the topological relationship, and the mapping relationship, a frequency of which an interference value is less than an interference threshold as the first frequency, where the interference threshold is determined by using a smallest interference value in the N frequencies; and generating, by the convergence node, the frequency information of the first secondary cell based on the selected first frequency. The convergence node may determine, by using the mapping relationship between the pRRUs and the cells, a pRRU corresponding to the first unlicensed carrier. The convergence node may select, based on the topological relationship between the pRRUs and with reference to the frequency interference information of the N frequencies, a frequency of which the interference value is less than the interference threshold as the first frequency, to reduce interference between different pRRUs.

In a possible design of the first aspect, the selecting, by the convergence node from the N frequencies, based on the frequency measurement results, the topological relationship, and the mapping relationship, a frequency of which an interference value is less than an interference threshold as the first frequency includes: selecting, by the convergence node from the N frequencies, a frequency of which the interference value is less than the interference threshold and of which a quantity of frequencies of the unlicensed carrier in the target primary cell is less than a threshold of the quantity of frequencies as the first frequency. When selecting the frequency for the first secondary cell, the convergence node may consider both the interference threshold and the threshold of the quantity of frequencies as a selecting condition to select the first frequency for the first secondary cell from the N frequencies. For example, the selecting condition may meet that: interference of the unlicensed carrier between pRRUs is the lowest and a quantity of frequencies of the unlicensed carrier in the coverage area of a same target primary cell is the lowest. In this way, interference between different pRRUs may be reduced.

In a possible design of the first aspect, the deploying, by a convergence node, a first secondary cell using a first unlicensed carrier includes: obtaining, by the convergence node, region information of a secondary cell; and creating, by the convergence node based on the region information of the secondary cell, the first secondary cell using the first unlicensed carrier. The convergence node may automatically generate, based on the region information of the secondary cell, the first unlicensed carrier allowed to be used by the secondary cell in the region, and automatically configure all public configurations related to the secondary cell. In addition, a coexistence solution of the unlicensed carrier may be completed by using the convergence node, without a customized configuration and maintenance.

In a possible design of the first aspect, before the sending, by the convergence node, cell information of the first secondary cell to a base band unit BBU, the method further includes: determining, by the convergence node based on a principle of performing sharing by using a same carrier, a primary cell having an overlapping coverage area with the first secondary cell as the target primary cell; and determining, by the convergence node, the BBU based on the target primary cell. The convergence node may determine the target primary cell in a manner of performing sharing by using the same carrier. For example, the primary cell having the overlapping coverage area with the first secondary cell is the target primary cell, and a BBU corresponding to the target primary cell is an object receiving the frequency information sent by the convergence node, so that the convergence node may send the cell information of the first secondary cell to the determined BBU based on the determined BBU.

In a possible design of the first aspect, before the sending, by the convergence node, cell information of the first secondary cell to a base band unit BBU, the method further includes: determining, by the convergence node based on an unlicensed carrier allocation proportion required by a principle of performing sharing by using different carriers sharing principle, a BBU set to which the first unlicensed carrier is allocated; determining, by the convergence node from a plurality of primary cells corresponding to the BBU set to which the first unlicensed carrier is allocated, a primary cell having an overlapping coverage area with the first secondary cell as the target primary cell; and determining, by the convergence node, the BBU based on the target primary cell. The convergence node may further determine the target primary cell in a manner of performing sharing by using different carriers. For example, the convergence node determines, based on a carrier allocation proportion between operators, an operator to which the first secondary cell is allocated. The operator may use the BBU set. Then, a primary cell that has the overlapping coverage area with the first secondary cell and that is selected from a plurality of primary cells corresponding to the BBU set is the target primary cell, the BBU corresponding to the target primary cell is an object receiving the frequency information sent by the convergence node, so that the convergence node may send the cell information of the first secondary cell to the determined BBU based on the determined BBU.

According to a second aspect, an embodiment of this application further provides an unlicensed carrier processing method, including: receiving, by a base band unit BBU, cell information that is of a first secondary cell and that is sent by a convergence node, where the BBU corresponds to a target primary cell using a licensed carrier, and the cell information includes a first frequency that corresponds to a first unlicensed carrier and that is selected by the convergence node; and configuring, by the BBU based on the cell information of the first secondary cell, the first secondary cell using the first unlicensed carrier. In this embodiment of this application, the base band unit may determine, from the convergence node, a frequency corresponding to the unlicensed carrier, so that a secondary cell can be configured on the frequency. The base band unit may transmit data by using the configured secondary cell, thereby implementing spectrum utilization of the unlicensed carrier.

In a possible design of the second aspect, the configuring, by the BBU based on the cell information of the first secondary cell, the first secondary cell using the first unlicensed carrier includes: sending, by the BBU, measurement configuration information to a terminal, where the measurement configuration information includes a first frequency that needs to be measured; receiving, by the BBU, a measurement report reported by the terminal based on the measurement configuration information; and configuring, by the BBU, the secondary cell on the first frequency based on the measurement report reported by the terminal. The BBU may deliver the measurement configuration information to the terminal, so that the terminal may perform measurement based on the first frequency indicated by the BBU. The terminal reports the measurement report to the BBU, and the BBU may configure the first secondary cell on the first frequency based on the measurement report reported by the terminal, to implement an accurate configuration of the secondary cell based on the measurement report.

In a possible design of the second aspect, the sending, by the BBU, measurement configuration information to a terminal includes: determining, by the BBU based on the cell information of the first secondary cell, that a quantity of first frequencies is S, where S is a positive integer greater than or equal to 2; determining, by the BBU, T first frequencies from the S first frequencies based on a quantity of secondary cells separately owned by the S first frequencies, where T is less than or equal to S; and sending, by the BBU to the terminal, measurement configuration information of the T first frequencies that need to be measured. The terminal may perform measurement on the T first frequencies. The BBU selects the S first frequencies, and the BBU only needs that the terminal measures the T first frequencies. When T is less than S, this embodiment of this application reduces a quantity of measurement frequencies of the terminal, and improves measurement efficiency.

According to a third aspect, an embodiment of this application provides a convergence node, including: a processing module, configured to deploy a first secondary cell using a first unlicensed carrier; the processing module, further configured to generate frequency information of the first secondary cell based on frequency interference information measured by a pico remote radio unit pRRU, where the frequency information includes a first frequency that corresponds to the first unlicensed carrier and that is selected by the convergence node for the first secondary cell; and a sending module, configured to send cell information of the first secondary cell to a base band unit BBU, where the cell information includes the frequency information of the first secondary cell, and the BBU corresponds to a target primary cell using a licensed carrier. In this embodiment of this application, a secondary cell using an unlicensed carrier is deployed on the convergence node, and the convergence node may uniformly plan frequencies of the secondary cell, so that a constraint performed by the pRRU on an instantaneous operating bandwidth may be met. In this embodiment of this application, a deployment location of the unlicensed carrier is disposed on the convergence node, so that the secondary cell using the unlicensed carrier may be used as a public resource to implement co-construction and sharing between operators, thereby improving spectrum utilization of the unlicensed carrier.

In a possible design of the third aspect, the processing module is specifically configured to generate the frequency information of the first secondary cell based on the frequency interference information measured by the pRRU, a topological relationship between pRRUs, and a mapping relationship between the pRRUs and cells, and the cell includes the first secondary cell and the target primary cell. The convergence node may further select an optimal frequency for the first secondary cell as the first frequency based on the frequency interference information measured by the pRRU, the topological relationship between the pRRUs, and the mapping relationship between the pRRUs and the cells, where the optimal frequency may be a frequency of which an interference value and a quantity of frequencies in a coverage area of the target primary cell meet a requirement.

In a possible design of the third aspect, the convergence node further includes: a receiving module, the receiving module, configured to receive frequency measurement results respectively reported by M pRRUs, where the frequency measurement results are information generated after each pRRU performs interference measurement on N frequencies, and M and N are positive integers; and the processing module, specifically configured to: select, from the N frequencies based on the frequency measurement results, the topological relationship, and the mapping relationship, a frequency of which an interference value is less than an interference threshold as the first frequency, where the interference threshold is determined by using a smallest interference value in the N frequencies; and generate the frequency information of the first secondary cell based on the selected first frequency. The convergence node may determine, by using the mapping relationship between the pRRUs and the cells, a pRRU corresponding to the first unlicensed carrier. The convergence node may select, based on the topological relationship between the pRRUs and with reference to the frequency interference information of the N frequencies, a frequency of which the interference value is less than the interference threshold as the first frequency, to reduce interference between different pRRUs.

In a possible design of the third aspect, the processing module is specifically configured to select, from the N frequencies, a frequency of which the interference value is less than the interference threshold and of which a quantity of frequencies of an unlicensed carrier in the target primary cell is less than a threshold of the quantity of frequencies as the first frequency. When selecting the frequency for the first secondary cell, the convergence node may consider both the interference threshold and the threshold of the quantity of frequencies as a selecting condition to select the first frequency for the first secondary cell from the N frequencies. For example, the selecting condition may meet that: interference of the unlicensed carrier between pRRUs is the lowest and a quantity of frequencies of the unlicensed carrier in the coverage area of a same target primary cell is the lowest. In this way, interference between different pRRUs may be reduced.

In a possible design of the third aspect, the processing module is specifically configured to: obtain region information of a secondary cell; and create, based on the region information of the secondary cell, the first secondary cell using the first unlicensed carrier. The convergence node may automatically generate, based on the region information of the secondary cell, the first unlicensed carrier allowed to be used by the secondary cell in the region, and automatically configure all public configurations related to the secondary cell. In addition, a coexistence solution of the unlicensed carrier may be completed by using the convergence node, without a customized configuration and maintenance.

In a possible design of the third aspect, before the sending module sends the cell information of the first secondary cell to the base band unit BBU, the processing module is further configured to: determine, based on a principle of performing sharing by using a same carrier, a primary cell having an overlapping coverage area with the first secondary cell as the target primary cell; and determine the BBU based on the target primary cell. The convergence node may determine the target primary cell in a manner of performing sharing by using the same carrier. For example, the primary cell having the overlapping coverage area with the first secondary cell is the target primary cell, and a BBU corresponding to the target primary cell is an object receiving the frequency information sent by the convergence node, so that the convergence node may send the cell information of the first secondary cell to the determined BBU based on the determined BBU.

In a possible design of the third aspect, before the sending module sends the cell information of the first secondary cell to the base band unit BBU, the processing module is further configured to: determine, based on an unlicensed carrier allocation proportion required by a principle of performing sharing by using different carriers, a BBU set to which the first unlicensed carrier is allocated; determine, from a plurality of primary cells corresponding to the BBU set to which the first unlicensed carrier is allocated, a primary cell having an overlapping coverage area with the first secondary cell as the target primary cell; and determine the BBU based on the target primary cell. The convergence node may further determine the target primary cell in a manner of performing sharing by using different carriers. For example, the convergence node determines, based on a carrier allocation proportion between operators, an operator to which the first secondary cell is allocated. The operator may use the BBU set. Then, a primary cell that has the overlapping coverage area with the first secondary cell and that is selected from a plurality of primary cells corresponding to the BBU set is the target primary cell, the BBU corresponding to the target primary cell is an object receiving the frequency information sent by the convergence node, so that the convergence node may send the cell information of the first secondary cell to the determined BBU based on the determined BBU.

In the third aspect of this application, composition modules of the convergence node may further perform steps described in the foregoing first aspect and the various possible implementations. For details, refer to the foregoing descriptions in the first aspect and the various possible implementations.

According to a fourth aspect, an embodiment of this application provides a base band unit, where the base band unit corresponds to a target primary cell using a licensed carrier, and the base band unit includes: a receiving module, configured to receive cell information that is of a first secondary cell and that is sent by a convergence node, where the cell information includes a first frequency that corresponds to a first unlicensed carrier and that is selected by the convergence node; and a processing module, configured to configure, based on the cell information of the first secondary cell, the first secondary cell using the first unlicensed carrier. In this embodiment of this application, the base band unit may determine, from the convergence node, a frequency corresponding to the unlicensed carrier, so that a secondary cell can be configured on the frequency. The base band unit may transmit data by using the configured secondary cell, thereby implementing spectrum utilization of the unlicensed carrier.

In a possible design of the fourth aspect, the base band unit further includes: a sending module, the sending module, configured to send measurement configuration information to a terminal, where the measurement configuration information includes a first frequency that needs to be measured; the receiving module, configured to receive a measurement report reported by the terminal based on the measurement configuration information; and the processing module, specifically configured to configure the secondary cell on the first frequency based on the measurement report reported by the terminal. The BBU may deliver the measurement configuration information to the terminal, so that the terminal may perform measurement based on the first frequency indicated by the BBU. The terminal reports the measurement report to the BBU, and the BBU may configure the first secondary cell on the first frequency based on the measurement report reported by the terminal, to implement an accurate configuration of the secondary cell based on the measurement report.

In a possible design of the fourth aspect, the processing module is specifically configured to: determine, based on the cell information of the first secondary cell, that a quantity of first frequencies is S, where S is a positive integer greater than or equal to 2; and determine T first frequencies from the S first frequencies based on a quantity of secondary cells separately owned by the S first frequencies, where T is less than or equal to S; and the sending module is specifically configured to send, to the terminal, measurement configuration information of the T first frequencies that need to be measured. The terminal may perform measurement on the T first frequencies. The BBU selects the S first frequencies, and the BBU only needs that the terminal measures the T first frequencies. When T is less than S, this embodiment of this application reduces a quantity of measurement frequencies of the terminal, and improves measurement efficiency.

In the fourth aspect of this application, composition modules of the base band unit may further perform steps described in the foregoing second aspect and the various possible implementations. For details, refer to the foregoing descriptions in the second aspect and the various possible implementations.

According to a fifth aspect, an embodiment of this application provides a convergence node, where the convergence node includes a processor and a memory, the memory is configured to store an instruction; and the processor is configured to execute the instruction in the memory, so that a communications apparatus performs the method according to any one of possible implementations in the foregoing first aspect.

According to a sixth aspect, an embodiment of this application provides a base band unit, where the base band unit includes a processor and a memory, the memory is configured to store an instruction; and the processor is configured to execute the instruction in the memory, so that a communications apparatus performs the method according to any one of possible implementations in the foregoing second aspect.

According to a seventh aspect, this application provides a chip system, where the chip system includes a processor, configured to support a convergence node or a base band unit in implementing functions in the foregoing aspects, for example, sending or processing data and/or information in the foregoing methods. In a possible design, the chip system further includes a memory, and the memory is configured to store a program instruction and data that are necessary to a network device or a terminal device. The chip system may include a chip, or may include a chip and another discrete device.

According to an eighth aspect, this application provides a computer-readable storage medium, the computer-readable storage medium stores an instruction, and when the instruction is run on a computer, the computer is enabled to perform the method according to the foregoing aspects.

According to a ninth aspect, this application provides a computer program product including an instruction, and when the instruction is run on a computer, the computer is enabled to perform the method according to the foregoing aspects.

According to a tenth aspect, this application provides an unlicensed carrier processing system, including a convergence node and a base band unit, where the convergence node and the base band unit communicate with each other; the convergence node is the convergence node according to any one of possible implementations in the foregoing third aspect; and the base band unit is the base band unit according to any one of possible implementations in the foregoing fourth aspect.

### BRIEF DESCRIPTION OF DRAWINGS

FIG. 1 is a schematic diagram of a composition structure of an unlicensed carrier processing system according to an embodiment of this application;
FIG. 2 is a schematic diagram of system architecture deployment of an unlicensed carrier processing system according to an embodiment of this application;
FIG. 3 is a schematic flowchart of interaction between a convergence node and a BBU according to an embodiment of this application;
FIG. 4 is a schematic block flowchart of an unlicensed carrier processing method according to an embodiment of this application;
FIG. 5 is a schematic block flowchart of another unlicensed carrier processing method according to an embodiment of this application;
FIG. 6-a is a schematic diagram of a composition structure of a convergence node according to an embodiment of this application;

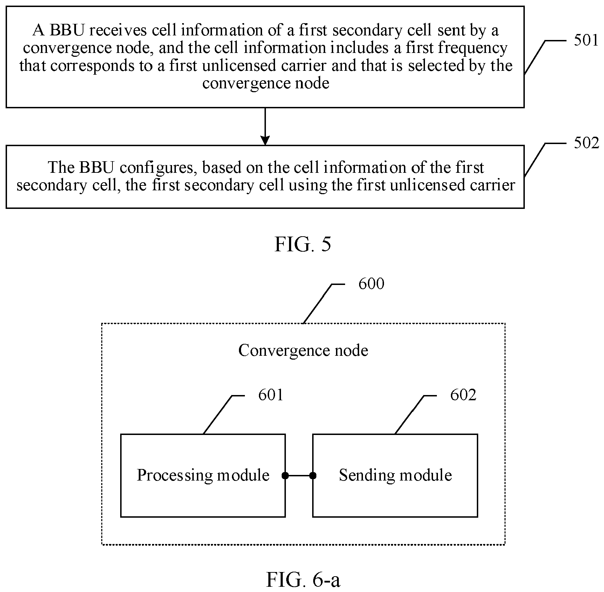

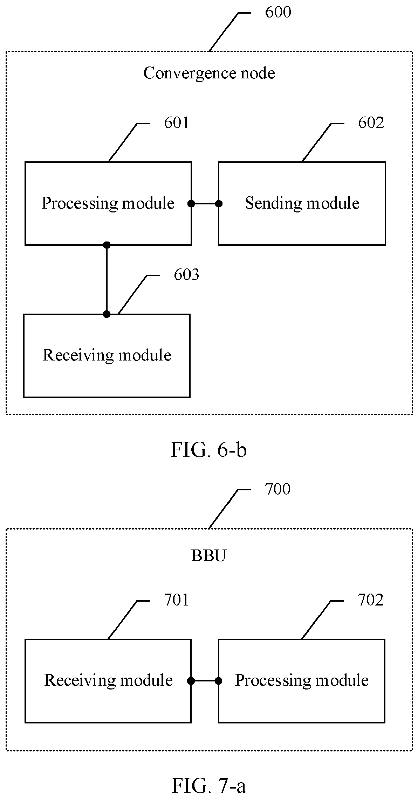

FIG. 6-b is a schematic diagram of a composition structure of another convergence node according to an embodiment of this application;

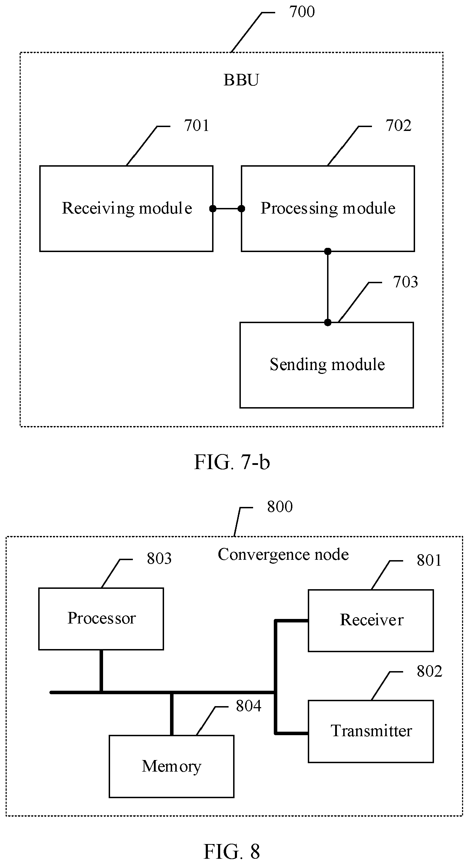

FIG. 7-a is a schematic diagram of a composition structure of a base band unit according to an embodiment of this application;
FIG. 7-b is a schematic diagram of a composition structure of another base band unit according to an embodiment of this application;
FIG. 8 is a schematic diagram of a composition structure of another convergence node according to an embodiment of this application; and

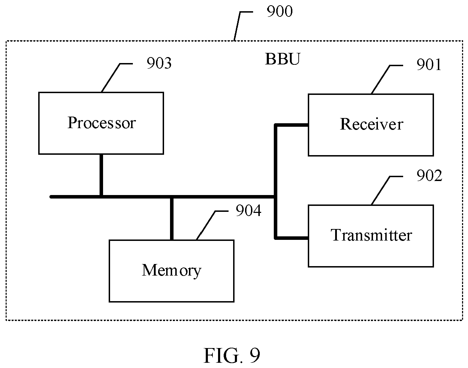

FIG. 9 is a schematic diagram of a composition structure of another base band unit according to an embodiment of this application.

### DESCRIPTION OF EMBODIMENTS

Embodiments of this application provide an unlicensed carrier processing method, apparatus, and system, to implement multi-operator co-construction and sharing of an unlicensed carrier, and improve spectrum utilization of the unlicensed carrier.

The following describes the embodiments of this application with reference to accompanying drawings.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in the embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

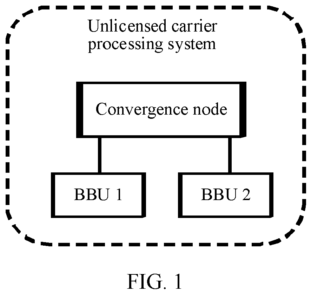

The unlicensed carrier processing system provided in the embodiments of this application is applicable to a scenario in which a single operator and multiple operators uniformly perform an operation and maintenance. The unlicensed carrier processing system may support independent radio frequency (Radio Frequency, RF) signal source feeding of different operators, and support digital signal source feeding that is of a future-oriented large-capacity and that is in a scenario of a 5th-generation (5th-Generation) mobile communications technology. As shown in FIG. 1, an unlicensed carrier processing system provided in an embodiment of this application may include a convergence node and a BBU. The convergence node may be implemented by using a BBU of a host operator, or may be implemented as an independent management unit of an unlicensed carrier. There may be a plurality of BBUs disposed in the unlicensed carrier processing system, for example, a BBU 1 and a BBU 2. Each BBU is separately connected to a base station network management subsystem of an operator, thereby implementing decoupling in an integrated access system.

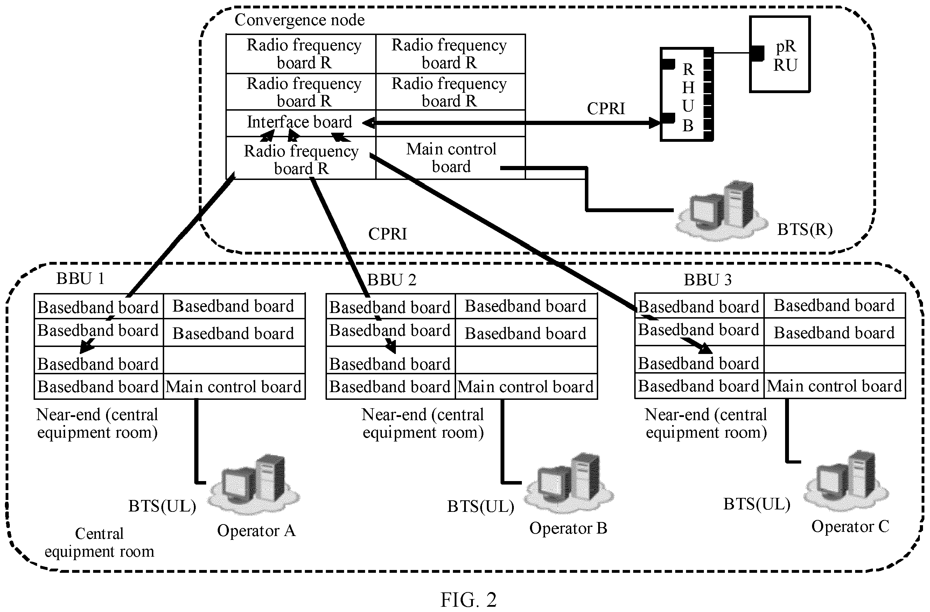

Referring to FIG. 2, an unlicensed carrier processing system provided in an embodiment of this application may include a convergence node and three BBUs. The three BBUs are a BBU 1, a BBU 2, and a BBU 3 respectively. The convergence node may be disposed in a remote building, and the three BBUs are disposed in a near-end central equipment room. The BBU 1 is connected to a base station network management subsystem (BTS(UL) for short) of an operator A, the BBU 2 is connected to a base station network management subsystem of an operator B, and the BBU 3 is connected to a base station network management subsystem of an operator C. The convergence node may be connected to each BBU by using a fiber channel, and the convergence node may further be connected to a pico remote radio unit (pico Remote Radio Unit, pRRU) by using a remote radio unit hub (also referred to as an RHUB). For example, the fiber channel may specifically include a common public radio interface (Common Public Radio Interface, CPRI) channel and a media access control (Media Access Control, MAC) channel. The RHUB is connected to the pRRU by using an electrical interface of the CPRI channel (also referred to as a CPRI-E), or the RHUB may further be connected to the pRRU by using an electrical interface of the MAC channel. The convergence node may be connected to a base station network management subsystem (BTS(R) for short) of a host operator by using an operation management (Operate Management, OM) channel. The convergence node may include a radio frequency board, an interface board, and a main control board. The BBU may include a baseband board and a main control board. The interface board of the convergence node may be connected to the baseband board of the BBU.

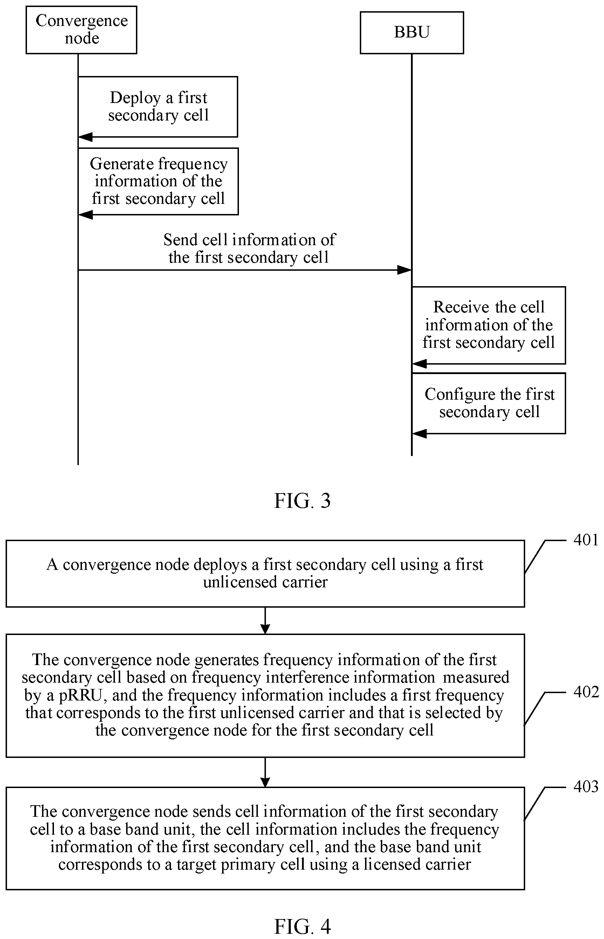

Based on the foregoing architecture of the unlicensed carrier processing system, the convergence node and the BBU that are included in the system are described below by using an example. Referring to FIG. 3, a procedure of interaction between a convergence node and a BBU may include the following processes.

S1: The convergence node deploys a first secondary cell using a first unlicensed carrier.

In this embodiment of this application, the convergence node first deploys a secondary cell using an unlicensed carrier. For example, the unlicensed carrier is defined as the "first unlicensed carrier", the secondary cell deployed by the convergence node is defined as the "first secondary cell", and the convergence node deploys the secondary cell on one side of the convergence node, to facilitate management performed by the convergence node on the secondary cell.

S2: The convergence node generates frequency information of the first secondary cell based on frequency interference information measured by a pRRU.

In this embodiment of this application, the convergence node may communicate with the pRRU by using an RHUB. There may be one or more pRRUs. After performing measurement on interference of each frequency, the pRRU sends the frequency interference information to the convergence node. The convergence node may select a frequency for the first secondary cell based on the frequency interference information, and the selected frequency is defined as a "first frequency". The convergence node may generate the frequency information of the first secondary cell, and the frequency information includes a first frequency that corresponds to the first unlicensed carrier and that is selected by the convergence node for the first secondary cell.

S3: The convergence node sends cell information of the first secondary cell to the BBU.

The convergence node may communicate with the BBU by using a CPRI channel. The convergence node sends the cell information of the first secondary cell to the BBU, and the cell information may include the foregoing generated frequency information of the first secondary cell. The BBU corresponds to a target primary cell using a licensed carrier.

S4: The BBU receives the cell information that is of the first secondary cell and that is sent by the convergence node, and the cell information includes the frequency information of the first secondary cell.

The frequency information includes the first frequency that corresponds to the first unlicensed carrier and that is elected by the convergence node. The BBU determines, from the frequency information, the first frequency selected by the convergence node. S5: The BBU may configure, based on the cell information of the first secondary cell, the first secondary cell using the first unlicensed carrier.

The BBU may configure the first secondary cell based on the cell information, and the BBU transmits data by using the configured first secondary cell, to implement spectrum utilization of the first unlicensed carrier.

In this embodiment of this application, the secondary cell using the unlicensed carrier is deployed on the convergence node, and the convergence node may uniformly plan frequencies of the secondary cell, so that a constraint performed by the pRRU on instantaneous operating bandwidth may be met. In this embodiment of this application, a deployment location of the unlicensed carrier is disposed on the convergence node, so that the secondary cell using the unlicensed carrier may be used as a common resource to implement co-construction and sharing between operators, thereby improving spectrum utilization of the unlicensed carrier.

It should be noted that, in this embodiment of this application, an unlicensed carrier processing method is provided. The convergence node is used to create the secondary cell and allocate the frequency, and the BBU configures the secondary cell based on secondary cell information sent by the convergence node, so that a mutual constraint between unlicensed frequencies used by operators may be avoided. Because frequencies of an unlicensed carrier are shared and an interference status dynamically changes, the secondary cell using the unlicensed carrier is deployed on the convergence node, to ensure that in a scenario in which operators perform sharing by using different carriers, different frequencies are selected by different operators in a continuous instantaneous bandwidth (Instantaneous Bandwidth, IBW) range. In this embodiment of this application, each operator may use a highest carrier aggregation specification, and select a frequency for the unlicensed carrier by using frequency interference information provided by a pRRU, to avoid a difficulty of inter-frequency deployment between pRRUs and reduce interference.

The following respectively describes the unlicensed carrier processing method provided in the embodiments of this application from perspectives of the convergence node and the BBU. An example is first used for description from a side of the convergence node. Referring to FIG. 4, an unlicensed carrier processing method provided in an embodiment of this application may include the following steps.

401: A convergence node deploys a first secondary cell using a first unlicensed carrier.

In this embodiment of this application, the convergence node first deploys a secondary cell using an unlicensed carrier. For example, the convergence node deploys the first secondary cell using the first unlicensed carrier and a second secondary cell using a second unlicensed carrier. The first unlicensed carrier and the second unlicensed carrier are used to indicate different unlicensed carriers, the convergence node may create a plurality of secondary cells using different unlicensed carriers, and the convergence node may create the secondary cell in a plurality of manners. The following provides an example for description.

In some embodiments of this application, step 401 in which the convergence node deploys the first secondary cell using the first unlicensed carrier includes:
obtaining, by the convergence node, region information of a secondary cell;
creating, by the convergence node based on the region information of the secondary cell, the first secondary cell using the first unlicensed carrier.

The convergence node first determines the region information of the secondary cell, for example, only simple region information of the secondary cell needs to be configured. The region information of the secondary cell may be specifically country code information of the cell. The convergence node may automatically generate, based on the country code information, the first unlicensed carrier allowed to be used by the secondary cell in the region, and automatically configure all public configurations related to the secondary cell. In addition, a coexistence solution of the unlicensed carrier may be completed by using the convergence node, without a customized configuration and maintenance.

402: The convergence node generates frequency information of the first secondary cell based on frequency interference information measured by a pico remote radio unit pRRU, and the frequency information includes a first frequency that corresponds to the first unlicensed carrier and that is selected by the convergence node for the first secondary cell.

In this embodiment of this application, the convergence node may communicate with the pRRU by using an RHUB. There may be one or more pRRUs. After performing measurement on interference of each frequency, the pRRU sends the frequency interference information to the convergence node. The convergence node may select the first frequency for the first secondary cell based on the frequency interference information, and the convergence node may generate the frequency information of the first secondary cell. It is not limited that the convergence node may further select a second frequency for the second secondary cell when deploying the second secondary cell.

In some embodiments of this application, the convergence node may select a frequency of the first secondary cell based on interference statuses of a plurality of frequencies measured by the pRRU. For example, the convergence node may select a frequency with smallest interference as the first frequency. In some embodiments of this application, step 402 in which the convergence node generates the frequency information of the first secondary cell based on the frequency interference information of the pRRU includes:
generating, by the convergence node, the frequency information of the first secondary cell based on the frequency interference information measured by the pRRU, a topological relationship between pRRUs, and a mapping relationship between the pRRUs and cells, where the cell includes the first secondary cell and a target primary cell.

The topological relationship between the pRRUs is a topological relationship between a plurality of pRRUs on which the first unlicensed carrier is located. The mapping relationship between the pRRUs and the cells is a secondary cell and a primary cell to which each pRRU is mapped. The cell includes the first secondary cell and the target primary cell. The convergence node may further select an optimal frequency for the first secondary cell as the first frequency based on the frequency interference information measured by the pRRU, the topological relationship between the pRRUs, and the mapping relationship between the pRRUs and the cells, where the optimal frequency may be a frequency of which an interference value and a quantity of frequencies in a coverage area of the target primary cell meet a requirement.

For example, the generating, by the convergence node, the frequency information of the first secondary cell based on the frequency interference information measured by the pRRU, a topological relationship between pRRUs, and a mapping relationship between the pRRUs and cells includes:
receiving, by the convergence node, frequency measurement results respectively reported by M pRRUs, where the frequency measurement results are information generated after each pRRU performs interference measurement on N frequencies, and M and N are positive integers;
selecting, by the convergence node from the N frequencies, based on the frequency measurement results, the topological relationship, and the mapping relationship, a frequency of which an interference value is less than an interference threshold as the first frequency, where the interference threshold is determined by using a smallest interference value in the N frequencies; and
generating, by the convergence node, the frequency information of the first secondary cell based on the selected first frequency.

That a quantity of pRRUs connected to the convergence node is M is used as an example. Each pRRU separately reports a frequency measurement result to the convergence node. A quantity of frequencies measured by each pRRU is N. Values of M and N are not limited. When selecting the first frequency, the convergence node selects the first frequency based on the smallest interference value in the N frequencies, for example, a frequency with a smallest interference value in the N frequencies may be selected as the first frequency. The convergence node may further determine the interference threshold by using the smallest interference value in the N frequencies. For example, the smallest interference value in the N frequencies is used as a basic value, and an interference value floating in a fixed proportion upwards is used as the interference threshold, the convergence node selects, from the N frequencies based on the frequency measurement result, the topological relationship between pRRUs, and the mapping relationship between the pRRUs and the cells, the frequency of which the interference value is less than the interference threshold as the first frequency. The convergence node may determine, based on the mapping relationship between the pRRUs and the cells, a pRRU corresponding to the first unlicensed carrier. The convergence node may select, based on the topological relationship between the pRRUs and with reference to the frequency interference information of the N frequencies, the frequency of which the interference value is less than the interference threshold as the first frequency, to reduce interference between different pRRUs.

Further, in some embodiments of this application, the selecting, by the convergence node from the N frequencies, based on the frequency measurement results, the topological relationship, and the mapping relationship, a frequency of which an interference value is less than an interference threshold as the first frequency includes:
selecting, by the convergence node from the N frequencies, the frequency of which the interference value is less than the interference threshold and of which a quantity of frequencies of the unlicensed carrier in the target primary cell is less than a threshold of the quantity of frequencies as the first frequency.

When selecting the frequency for the first secondary cell, the convergence node may consider both the interference threshold and the threshold of the quantity of frequencies as a selecting condition to select the first frequency for the first secondary cell from the N frequencies. For example, the selecting condition may meet that: interference of the unlicensed carrier between pRRUs is the lowest and a quantity of frequencies of the unlicensed carrier in the coverage area of a same target primary cell is the lowest. In this way, interference between different pRRUs may be reduced.

403: The convergence node sends cell information of the first secondary cell to a BBU, and the BBU corresponds to a target primary cell using a licensed carrier.

In this embodiment of this application, after the convergence node generates the frequency information of the first secondary cell, the convergence node may send the cell information of the first secondary cell to the BBU corresponding to the target primary cell using the licensed carrier. For example, the cell information of the first secondary cell includes the frequency information of the first secondary cell. A receiving object selected by the convergence node is the BBU corresponding to the target primary cell using the licensed carrier. The convergence node may determine the target primary cell based on a default configuration. The convergence node may further select the target primary cell from a plurality of primary cells. The target primary cell may be selected in a plurality of implementations. The following provides an example for description.

In some embodiments of this application, before step 403 in which the convergence node sends the cell information of the first secondary cell to the BBU, the unlicensed carrier processing method provided in an embodiment of this application may include:
determining, by the convergence node based on a principle of performing sharing by using a same carrier, a primary cell having an overlapping coverage area with the first secondary cell as the target primary cell; and
determining, by the convergence node, the BBU based on the target primary cell.

The convergence node may determine the target primary cell in a manner of performing sharing by using the same carrier. For example, the primary cell having the overlapping coverage area with the first secondary cell is the target primary cell, and a BBU corresponding to the target primary cell is an object receiving the frequency information sent by the convergence node, so that the convergence node may send the cell information of the first secondary cell to the determined BBU based on the determined BBU.

In some embodiments of this application, before step 403 in which the convergence node sends the cell information of the first secondary cell to the BBU, the unlicensed carrier processing method provided in an embodiment of this application may include:
determining, by the convergence node based on an unlicensed carrier allocation proportion required by a principle of performing sharing by using different carriers, a BBU set to which the first secondary cell using the first unlicensed carrier is allocated;
determining, by the convergence node from a plurality of primary cells corresponding to the BBU set to which the first secondary cell is allocated, a primary cell having an overlapping coverage area with the first secondary cell as the target primary cell; and
determining, by the convergence node, the BBU based on the target primary cell.

The convergence node may further determine the target primary cell in a manner of performing sharing by using different carriers. For example, the convergence node determines, based on a carrier allocation proportion between operators, an operator to which the first secondary cell is allocated. The operator may use the BBU set. Then, a primary cell that has the overlapping coverage area with the first secondary cell and that is selected from a plurality of primary cells corresponding to the BBU set is the target primary cell, the BBU corresponding to the target primary cell is an object receiving the frequency information sent by the convergence node, so that the convergence node may send the cell information of the first secondary cell to the determined BBU based on the determined BBU.

It can be learned from the example description in the foregoing embodiments that the convergence node first deploys the first secondary cell using the first unlicensed carrier, and then the convergence node generates the frequency information of the first secondary cell based on the frequency interference information measured by the pRRU, and the frequency information includes: a first frequency that corresponds to the first unlicensed carrier and that is selected by the convergence node for the first secondary cell; and finally, the convergence node sends the cell information of the first secondary cell to the BBU, and the BBU corresponds to the target primary cell using the licensed carrier. In this embodiment of this application, the secondary cell using the unlicensed carrier is deployed on the convergence node, and the convergence node may uniformly plan frequencies of the secondary cell, so that a constraint performed by the pRRU on an instantaneous operating bandwidth may be met. In this embodiment of this application, a deployment location of the unlicensed carrier is disposed on the convergence node, so that the secondary cell using the unlicensed carrier may be used as a public resource to implement co-construction and sharing between operators, thereby improving spectrum utilization of the unlicensed carrier.

In the foregoing embodiments, the unlicensed carrier processing method provided in the embodiments of this application is described from a side of the convergence node. The following describes the unlicensed carrier processing method provided in the embodiments of this application from a side of the BBU. Referring to FIG. 5, an unlicensed carrier processing method provided in an embodiment of this application mainly includes the following steps.

501: A BBU receives cell information of a first secondary cell sent by a convergence node, and the cell information includes a first frequency that corresponds to a first unlicensed carrier and that is selected by the convergence node.

In this embodiment of this application, the BBU corresponds to a target primary cell using a licensed carrier, and the BBU is a receiving object determined by the convergence node. After the BBU receives the cell information of the first secondary cell, the BBU parses the cell information sent by the convergence node, and the BBU may determine that a frequency selected by the convergence node for the first secondary cell is the first frequency.

502: The BBU configures, based on the cell information of the first secondary cell, the first secondary cell using the first unlicensed carrier.

In this embodiment of this application, after the BBU may determine that the frequency selected by the convergence node for the first secondary cell is the first frequency, the BBU may configure, on the first frequency, the first secondary cell using the first unlicensed carrier. After the first secondary cell is configured, the BBU may transmit data by using the first secondary cell, to implement spectrum utilization of the first unlicensed carrier.

In this embodiment of this application, the secondary cell using the unlicensed carrier is deployed on the convergence node, and the convergence node may uniformly plan frequencies of the secondary cell, so that a constraint performed by the pRRU on an instantaneous operating bandwidth may be met. In this embodiment of this application, a deployment location of the unlicensed carrier is disposed on the convergence node, so that the secondary cell using the unlicensed carrier may be used as a public resource to implement co-construction and sharing between operators, thereby improving spectrum utilization of the unlicensed carrier.

It should be noted that, in the foregoing embodiment of this application, the BBU may configure the first secondary cell in a blind configuration manner. To be specific, the BBU adds the first secondary cell by using a default configuration parameter of the cell, so that configuration efficiency of the cell may be improved. In some embodiments of this application, step 502 in which the BBU configures, based on the frequency information of the unlicensed carrier, the first secondary cell using the first unlicensed carrier includes:
sending, by the BBU, measurement configuration information to a terminal, where the measurement configuration information includes a first frequency that needs to be measured;
receiving, by the BBU, a measurement report reported by the terminal based on the measurement configuration information; and
configuring, by the BBU, the secondary cell on the first frequency based on the measurement report reported by the terminal.

The BBU may deliver the measurement configuration information to the terminal, so that the terminal may perform measurement based on the first frequency indicated by the BBU. The terminal reports the measurement report to the BBU, and the BBU may configure the first secondary cell on the first frequency based on the measurement report reported by the terminal, to implement an accurate configuration of the secondary cell based on the measurement report. A process of measurement performed by the terminal on the frequency is not described in detail again.

Further, in some embodiments of this application, the sending, by the BBU, measurement configuration information to a terminal includes:
determining, by the BBU based on the cell information of the first secondary cell, that a quantity of first frequencies is S, where S is a positive integer greater than or equal to 2;
determining, by the BBU, T first frequencies from the S first frequencies based on a quantity of secondary cells separately owned by the S first frequencies, where T is less than or equal to S; and
sending, by the BBU to the terminal, measurement configuration information of the T first frequencies that need to be measured.

There are a plurality of first frequencies selected by the convergence node for the first secondary cell. For example, when there are S first frequencies, the BBU may determine T first frequencies from the S first frequencies based on the quantity of secondary cells separately owned by the S first frequencies, and T is less than or equal to S. For example, the BBU determines, based on the quantity of secondary cells separately owned by the S first frequencies, first T first frequencies having a largest quantity of secondary cells. The BBU sends, to the terminal, the measurement configuration information of the T first frequencies that need to be measured, so that the terminal may perform measurement on the T first frequencies. The BBU selects the S first frequencies, and the BBU only needs that the terminal measures the T first frequencies. When T is less than S, this embodiment of this application reduces a quantity of measurement frequencies of the terminal, and improves measurement efficiency.

It can be learned from the example description in the foregoing embodiments that the base band unit corresponds to the target primary cell using the licensed carrier. The base band unit first receives the cell information that is of the first secondary cell and that is sent by the convergence node, and the cell information includes the frequency information of the first secondary cell. The frequency information includes the first frequency that corresponds to the first unlicensed carrier and that is selected by the convergence node. The base band unit may configure, based on the cell information of the first secondary cell, the first secondary cell using the first unlicensed carrier. In this embodiment of this application, the base band unit may determine, from the convergence node, a frequency corresponding to the unlicensed carrier, so that a secondary cell can be configured on the frequency. The base band unit may transmit data by using the configured secondary cell, thereby implementing spectrum utilization of the unlicensed carrier.

To better understand and implement the foregoing solutions in the embodiments of this application, the following uses a corresponding application scenario as an example for detailed description.

Based on the foregoing architecture of the unlicensed carrier processing system, a process of co-construction and sharing of an unlicensed carrier in an actual scenario is described below by using an example. In this embodiment of this application, the convergence node may be responsible for managing physical devices of an RHUB and a pRRU, and performing virtualization and slicing on resource objects of the pRRU and the RHUB. Main resources include resources such as a carrier (standard, frequency band, transmit power, and bandwidth) resource, a CPRI bandwidth resource, and a quantity of combined cells. The resources are divided based on an actual situation of each operator. Using the carrier resource as an example, an operator binds an allocated carrier resource to a BBU on an operator side, for example, an unlicensed carrier F 1 allocated to an operator A and an unlicensed carrier F2 allocated to an operator B are used to activate a corresponding BBU and a corresponding service. An unlicensed carrier resource, as a public resource, is allocated to each BBU through virtualization and slicing, in this way, each operator device can independently invoke the unlicensed carrier resource.

In this embodiment of this application, the convergence node may implement sharing of frequencies of the unlicensed carrier among a plurality of operators. Through unified planning performed by the convergence node, different operators may select different frequencies. In a licensed assisted access (LAA) scenario, a networking manner of multi-operator co-construction and sharing is used as an example for description. An LAA cell is deployed on the convergence node, serves as a public resource such as the RHUB and the pRRU, is managed by a host operator, and is shared among multiple operators. The convergence node configures an LAA secondary cell SCell in a minimalist manner, and it only needs to support a simple configuration to complete building the secondary cell. A minimalist operation and maintenance solution of the LAA is maintained by the host operator. This embodiment of this application may support inter-BBU coordination-based carrier aggregation between the operator and the LAA SCell of the host operator.

This embodiment of this application relates to two network elements: the BBU and the convergence node. The BBU is configured to: configure the secondary cell in which the unlicensed carrier is deployed; receive frequency information of the unlicensed carrier from the convergence node; send measurement configuration information to a terminal; and configure the secondary cell based on a measurement result of the terminal. The convergence node may be configured to deploy the secondary cell. For example, the convergence node configures the secondary cell by using a coexistence technology of the unlicensed carrier, and the convergence node manages the secondary cell by using a minimalist operation and maintenance manner of an LAA SCell.

In this embodiment of this application, a simplified configuration function of the cell having the unlicensed carrier is implemented, the unlicensed carrier is carried on the convergence node of multiple operators as a public resource, to implement efficient sharing among multiple operators. A process of interaction between the convergence node and a BBU is described below by using an example, and mainly includes the following steps.

### 1: A convergence node deploys a secondary cell using an unlicensed carrier.

The convergence node only needs to configure simple region information, for example, country code, and may automatically configure, based on the country code information, all public configurations related to the cell. Coexistence-related technologies of the unlicensed carrier are internally implemented, without a customized configuration and maintenance.

2: The convergence node selects a frequency of a secondary cell on each pRRU based on a frequency interference status measured by the pRRU, a topological relationship between pRRUs, and a mapping relationship between the pRRUs and the cells.

For example, the convergence node obtains the mapping relationship between the pRRUs and the cells, and the cells may include a primary cell using a licensed carrier and the secondary cell using the unlicensed carrier, as shown in Table 1.

| | Category | Operat or | pRRU 1 | pRRU 2 |
|---|---|---|---|---|
| Cell 1 | Licensed | A | √ | √ |
| Cell 2 | Licensed | B | | √ |
| Cell 3 | Licensed | B | √ | |
| Cell 4 | Unlicensed | | | √ |
| Cell 5 | Unlicensed | | | √ |
| Cell 6 | Unlicensed | | √ | |
| Cell 7 | Unlicensed | | √ | |

The tick in the Table 1 indicates that the pRRU is configured with a corresponding cell. For example, in the Table 1, the Cell 1 is a cell using a licensed carrier, and both the pRRU 1 and the pRRU 2 are configured with the Cell 1.

3: The convergence node automatically selects a frequency for each secondary cell using the unlicensed carrier. For example, an optimal combination of unlicensed frequencies is selected based on a location relationship between a pRRU in which the primary cell using the licensed carrier is located and a pRRU in which the secondary cell using the unlicensed carrier is located, and a topological relationship between pRRUs in which the secondary cell using the unlicensed carrier is located. The optimal means that unlicensed interference between pRRUs is the lowest and a quantity of frequencies of the unlicensed frequency in a coverage area of the primary cell using the licensed carrier is the smallest.

After the convergence node determines the frequency, the convergence node sends secondary cell information to the BBU corresponding to the primary cell using the licensed carrier based on the following principle. A selecting principle of the primary cell using the licensed carrier may include:
A. Sharing performed by using a same carrier: that is, a primary cell having overlapping coverage with the secondary cell using the unlicensed carrier.

Referring to the example description table of the foregoing Table 1, a sent target primary cell using the licensed carrier is selected, and the target primary cell using the licensed carrier and the secondary cell using the unlicensed carrier have overlapping coverage, as shown in Table 2:

| | pRRU | Target primary cell using a licensed carrier |
|---|---|---|
| Cell 4 | pRRU 2 | Cell 1 and cell 2 |
| Cell 5 | pRRU 2 | Cell 1 and cell 2 |
| Cell 6 | pRRU 1 | Cell 1 and cell 3 |
| Cell 7 | pRRU 1 | Cell 1 and cell 3 |

B. Sharing performed by using different carriers: The primary cell having overlapping coverage with the secondary cell using the unlicensed carrier is first selected, an operator corresponding to the unlicensed carrier is determined based on a carrier allocation proportion of the operator, for example, A:B = 1:1, and then the primary cell having overlapping coverage with the secondary cell using the unlicensed carrier is selected, as shown in Table 3.

| | pRRU | Target primary cell using a licensed carrier | Note |
|---|---|---|---|
| Cell 4 | pRRU 2 | Cell 1 | Co-coverage cells include the Cell 1 and the Cell 2, which respectively belong to an operator A and an operator B, and the Cell 4 and the Cell 5 respectively correspond to one target primary cell. |
| Cell 5 | pRRU 2 | Cell 2 | |
| Cell 6 | pRRU 1 | Cell 1 | Same as above |
| Cell 7 | pRRU 1 | Cell 3 | |

The co-coverage cells include the Cell 1 and the Cell 2. The operator to which the unlicensed carrier belongs may be determined based on the carrier allocation proportion of the operator. If the unlicensed carrier belongs to the operator A, it may be determined that a target primary cell corresponding to a secondary cell Cell 4 is the Cell 1.

4: The BBU primary cell using the licensed carrier receives, the secondary cell information sent by the convergence node, and determines whether blind configuration is selected. If blind configuration is selected, an LAA SCell may be configured without performing measurement, and the LAA SCell may be directly configured as an SCell. Then, the procedure ends. If blind configuration is not selected, the BBU needs to add an LAA SCell based on a measurement result. The BBU sends frequency information of the secondary cell to a terminal through a measurement configuration information. The BBU receives a measurement report from the terminal and configures the LAA SCell based on the measurement result.

In this embodiment of this application, after the BBU completes configuring the secondary cell, the terminal may perform inter-BBU coordinated LAA. The LAA is carrier aggregation, while the SCell of the LAA works on an unlicensed spectrum. The secondary cell using the unlicensed carrier uses a simplified operation and maintenance manner, which is responsible by a host operator. For example, the host operator is responsible for LAA SCell configuration, restart, alarm reporting, and the like.

The secondary cells using the unlicensed carrier is deployed on the convergence node. Frequencies of the secondary cell using the unlicensed carrier are uniformly planned on the convergence node, to ensure that a constraint of the pRRU IBW is met. In addition, sharing performed by using the same carrier may be implemented between operators, a quantity of unlicensed frequencies at a single head end is reduced, interference between pRRUs is reduced, and spectral efficiency is improved to the greatest extent. In addition, each operator can use a highest spectrum resource, for example, a pRRU has four unlicensed frequencies in total, the four unlicensed frequencies are shared by two operators, and each operator may use the four unlicensed frequencies, to fully use all carriers. According to a location mapping relationship between the primary cell and the secondary cell using the unlicensed carrier, the primary cell using the licensed carrier performs measurement and configuration and only sends frequencies in a coverage area of the primary cell using the licensed carrier, to reduce a quantity of frequencies that need to be measured and improve measurement efficiency.

Compared with the prior art, in this embodiment of this application, the convergence node accurately locates frequency information of the unlicensed carrier in a coverage area of the target primary cell based on a relationship between a pRRU in which the primary cell using the licensed carrier is located and a pRRU in which the secondary cell using the unlicensed carrier is located and a topological relationship between pRRUs, to reduce a quantity of frequencies that need to be measured, reduce a delay of configuring the secondary cell by UE, and improve user experience. In this embodiment of this application, a deployment location of the unlicensed carrier is changed, so that the unlicensed carrier is shared by a plurality of operators as a public resource, and each operator may configure a secondary carrier with a highest specification.

It should be noted that, in this embodiment of this application, a multi-operator co-construction and sharing network architecture is used, so that the unlicensed carrier is responsible and managed by the host operator as a public resource, thereby implementing sharing performed by licensed carriers of multiple operators by using different BBUs, and sharing performed by unlicensed carriers by using the same carrier, to maximize spectral efficiency of the unlicensed carrier. The cell using the unlicensed carrier uses a minimalist operation and maintenance solution, which is responsible by the convergence node, to reduce operation and maintenance costs of the operator. An optimal frequency combination is selected based on the topological relationship between the primary cell using the licensed carrier and the secondary cell using the unlicensed carrier, to reduce interference, minimize a quantity of frequencies that need to be measured, and improve measurement efficiency.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that the embodiments described in this specification all belong to exemplary embodiments, and the involved actions and modules are not necessarily required by this application.

To better implement the foregoing solutions in the embodiments of this application, the following further provides a related apparatus configured to implement the foregoing solutions.

Referring to FIG. 6-a, an embodiment of this application provides a convergence node 600. The convergence node 600 may include: a processing module 601 and a sending module 602,
the processing module 601, configured to deploy a first secondary cell using a first unlicensed carrier;
the processing module 601, further configured to generate frequency information of the first secondary cell based on frequency interference information measured by a pico remote radio unit pRRU, where the frequency information includes a first frequency that corresponds to the first unlicensed carrier and that is selected by the convergence node for the first secondary cell; and
the sending module 602, configured to send cell information of the first secondary cell to a base band unit BBU, where the cell information includes the frequency information of the first secondary cell, and the BBU corresponds to a target primary cell using a licensed carrier.

In some embodiments of this application, the processing module 601 is specifically configured to generate the frequency information of the first secondary cell based on the frequency interference information measured by the pRRU, a topological relationship between pRRUs, and a mapping relationship between the pRRUs and cells, where the cell includes the first secondary cell and the target primary cell.

In some embodiments of this application, as shown in FIG. 6-b, the convergence node 600 further includes: a receiving module 603,
the receiving module 603, configured to receive frequency measurement results respectively reported by M pRRUs, where the frequency measurement results are information generated after each pRRU performs interference measurement on N frequencies, and M and N are positive integers; and
the processing module 602, specifically configured to: select, from the N frequencies based on the frequency measurement results, the topological relationship, and the mapping relationship, a frequency of which an interference value is less than an interference threshold as the first frequency, where the interference threshold is determined by using a smallest interference value in the N frequencies; and generate the frequency information of the first secondary cell based on the selected first frequency.

In some embodiments of this application, the processing module 601 is specifically configured to select, from the N frequencies, a frequency of which the interference value is less than the interference threshold and of which a quantity of frequencies of an unlicensed carrier in the target primary cell is less than a threshold of the quantity of frequencies as the first frequency.

In some embodiments of this application, the processing module 601 is specifically configured to: obtain region information of a secondary cell; and create, based on the region information of the secondary cell, the first secondary cell using the first unlicensed carrier.

In some embodiments of this application, before the sending module 602 sends the cell information of the first secondary cell to the base band unit BBU, the processing module 601 is further configured to: determine, based on a principle of performing sharing by using a same carrier, a primary cell having an overlapping coverage area with the first secondary cell as the target primary cell; and determine the BBU based on the target primary cell.

In some embodiments of this application, before the sending module 602 sends the cell information of the first secondary cell to the base band unit BBU, the processing module 601 is further configured to: determine, based on an unlicensed carrier allocation proportion required by a principle of performing sharing by using different carriers, a BBU set to which the first unlicensed carrier is allocated; determine, from a plurality of primary cells corresponding to the BBU set to which the first unlicensed carrier is allocated, a primary cell having an overlapping coverage area with the first secondary cell as the target primary cell; and determine the BBU based on the target primary cell.

It can be learned from the example description in the foregoing embodiments that the convergence node first deploys the first secondary cell using the first unlicensed carrier, and then the convergence node generates the frequency information of the first secondary cell based on the frequency interference information measured by the pRRU, and the frequency information includes: a first frequency that corresponds to the first unlicensed carrier and that is selected by the convergence node for the first secondary cell; and finally, the convergence node sends the cell information of the first secondary cell to the BBU, and the BBU corresponds to the target primary cell using the licensed carrier. In this embodiment of this application, the secondary cell using the unlicensed carrier is deployed on the convergence node, and the convergence node may uniformly plan frequencies of the secondary cell, so that a constraint performed by the pRRU on an instantaneous operating bandwidth may be met. In this embodiment of this application, a deployment location of the unlicensed carrier is disposed on the convergence node, so that the secondary cell using the unlicensed carrier may be used as a public resource to implement co-construction and sharing between operators, thereby improving spectrum utilization of the unlicensed carrier.

Referring to FIG. 7-a, an embodiment of this application provides a BBU 700. The BBU 700 corresponds to a target primary cell using a licensed carrier. The BBU 700 includes: a receiving module 701 and a processing module 702,
the receiving module 701, configured to receive cell information that is of a first secondary cell and that is sent by a convergence node, where the cell information includes a first frequency that corresponds to a first unlicensed carrier and that is selected by the convergence node; and
the processing module 702, configured to configure, based on the cell information of the first secondary cell, the first secondary cell using the first unlicensed carrier.

In some embodiments of this application, as shown in FIG. 7-b, the BBU 700 further includes: a sending module 703,
the sending module 703, configured to send measurement configuration information to a terminal, where the measurement configuration information includes a first frequency that needs to be measured;
the receiving module 701, configured to receive a measurement report reported by the terminal based on the measurement configuration information; and
the processing module 702, specifically configured to configure the secondary cell on the first frequency based on the measurement report reported by the terminal.

In some embodiments of this application, the processing module 702 is specifically configured to: determine, based on the cell information of the first secondary cell, that a quantity of first frequencies is S, where S is a positive integer greater than or equal to 2; and determine T first frequencies from the S first frequencies based on a quantity of secondary cells separately owned by the S first frequencies, where T is less than or equal to S; and
the sending module 703 is specifically configured to send, to the terminal, measurement configuration information of the T first frequencies that need to be measured.

It can be learned from the example description in the foregoing embodiments that the base band unit corresponds to the target primary cell using the licensed carrier. The base band unit first receives the cell information that is of the first secondary cell and that is sent by the convergence node, and the cell information includes the frequency information of the first secondary cell. The frequency information includes the first frequency that corresponds to the first unlicensed carrier and that is selected by the convergence node. The base band unit may configure, based on the cell information of the first secondary cell, the first secondary cell using the first unlicensed carrier. In this embodiment of this application, the base band unit may determine, from the convergence node, a frequency corresponding to the unlicensed carrier, so that a secondary cell can be configured on the frequency. The base band unit may transmit data by using the configured secondary cell, thereby implementing spectrum utilization of the unlicensed carrier.

An embodiment of this application further provides a computer storage medium. The computer storage medium stores a program, and the program performs some or all of the steps recorded in the foregoing method embodiments.

The following describes another convergence node provided in an embodiment of this application. Referring to FIG. 8, a convergence node 800 includes:
a receiver 801, a transmitter 802, a processor 803, and a memory 804 (there may be one or more processors 803 in the convergence node 800, and that there is one processor in the convergence node 800 is used as an example in FIG. 8). In some embodiments of this application, the receiver 801, the transmitter 802, the processor 803, and the memory 804 may be connected by using a bus or in another manner. In FIG. 8, an example in which the receiver 801, the transmitter 802, the processor 803, and the memory 804 are connected by using the bus is used.

The memory 804 may include a read-only memory and a random access memory, and provide an instruction and data to the processor 803. Apart of the memory 804 may further include a non-volatile random access memory (English full name: Non-Volatile Random Access Memory, NVRAM for short). The memory 804 stores an operating system and an operation instruction, an executable module or a data structure, or a subnet thereof, or an extended set thereof. The operation instruction may include various operation instructions, to implement various operations. The operating system may include various system programs, to implement various basic services and process hardware-based tasks.

The processor 803 controls an operation of the convergence node, and the processor 803 may further be referred to as a central processing unit (English full name: Central Processing Unit, CPU for short). In a specific application, components of the convergence node are coupled together by using a bus system. In addition to a data bus, the bus system includes a power bus, a control bus, and a status signal bus. However, for clear description, various types of buses in the figure are marked as the bus system.

The method disclosed in the foregoing embodiments of this application may be applied to the processor 803, or may be implemented by the processor 803. The processor 803 may be an integrated circuit chip and has a signal processing capability. In an implementation process, steps in the foregoing methods can be implemented by using a hardware integrated logical circuit in the processor 803, or by using instructions in a form of software. The processor 803 may be a general purpose processor, a digital signal processor (English full name: digital signal processor, DSP for short), an application-specific integrated circuit (English full name: Application Specific Integrated Circuit, ASIC for short), a field-programmable gate array (English full name: Field-Programmable Gate Array, FPGA for short) or another programmable logical device, a discrete gate or transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 804, and a processor 803 reads information in the memory 804 and completes the steps in the foregoing methods in combination with hardware of the processor.

In this embodiment of this application, the processor 803 is configured to perform the unlicensed carrier processing method performed on a side of the convergence node. For details, refer to the description of the method in the foregoing embodiments.

The following describes another BBU provided in an embodiment of this application. Referring to FIG. 9, the BBU 900 includes a receiver 901, a transmitter 902, a processor 903, and a memory 904 (there may be one or more processors 903 in the BBU 900, and that there is one processor in the BBU 900 is used as an example in FIG. 9). In some embodiments of this application, the receiver 901, the transmitter 902, the processor 903, and the memory 904 may be connected by using a bus or in another manner. In FIG. 9, an example in which the receiver 901, the transmitter 902, the processor 903, and the memory 904 are connected by using the bus is used.

The memory 904 may include a read-only memory and a random access memory, and provide an instruction and data to the processor 903. Apart of the memory 904 may further include an NVRAM. The memory 904 stores an operating system and an operation instruction, an executable module or a data structure, or a subset thereof, or an extended set thereof. The operation instruction may include various operation instructions, to implement various operations. The operating system may include various system programs, to implement various basic services and process hardware-based tasks.

The processor 903 controls an operation of the BBU, and the processor 903 may further be referred to as a CPU. In a specific application, components of the BBU are coupled together by using a bus system. In addition to a data bus, the bus system includes a power bus, a control bus, and a status signal bus. However, for clear description, various types of buses in the figure are marked as the bus system.

The method disclosed in the foregoing embodiments of this application may be applied to the processor 903, or may be implemented by the processor 903. The processor 903 may be an integrated circuit chip and has a signal processing capability. In an implementation process, steps in the foregoing methods can be implemented by using a hardware integrated logical circuit in the processor 903, or by using instructions in a form of software. The foregoing processor 903 may be a general purpose processor, a DSP, an ASIC, an FPGA or another programmable logical device, a discrete gate or transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 904, and a processor 903 reads information in the memory 904 and completes the steps in the foregoing methods in combination with hardware of the processor.

In this embodiment of this application, the processor 903 is configured to perform the unlicensed carrier processing method performed on a side of the foregoing BBU. For details, refer to the description of the method in the foregoing embodiments.

In another possible design, when the convergence node or the BBU is a chip in a device, the chip includes a processing unit and a communications unit. The processing unit may be, for example, a processor. The communications unit may be, for example, an input/output interface, a pin, or a circuit. The processing unit may execute a computer executable instruction stored in a storage unit, so that the chip in the device performs the wireless communication method according to any one of possible designs in the first aspect. Optionally, the storage unit is a storage unit in the chip, for example, a register or a cache, or the storage unit may alternatively be a storage unit that is in the terminal and that is outside the chip, for example, a read-only memory (read-only memory, ROM), another type of static storage device that can store static information and an instruction, or a random access memory (random access memory, RAM).

The processor mentioned in any of the foregoing designs may be a general-purpose central processing unit (CPU), a microprocessor, an application-specific integrated circuit (application-specific integrated circuit, ASIC), or one or more integrated circuits for controlling program execution of the wireless communication method according to the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. In addition, in the accompanying drawings of the apparatus embodiments provided by this application, connection relationships between modules indicate that the modules have communication connections with each other, which may be specifically implemented as one or more communications buses or signal cables. A person of ordinary skill in the art may understand and implement the embodiments of the present invention without creative efforts.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for this application, software program implementation is a better implementation in most cases. Based on such an understanding, the technical solutions of this application essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described in the embodiments of this application.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

## Claims

1. An unlicensed carrier processing method, comprising:
deploying (401), by a convergence node, a first secondary cell using a first unlicensed carrier, wherein the first secondary cell is deployed on the convergence node, wherein a deployment location of the first unlicensed carrier is disposed on the convergence node, wherein the convergence node is connected to each base band unit, BBU, of a BBU set, and wherein each BBU belongs to a different operator;
generating (402), by the convergence node, frequency information of the first secondary cell based on frequency interference information measured by and received from a pico remote radio unit, pRRU, wherein the frequency information comprises a first frequency that corresponds to the first unlicensed carrier and that is selected by the convergence node for the first secondary cell, and wherein the pRRU is connected to the convergence node using a remote radio unit hub, RHUB, wherein the generating, by the convergence node, frequency information of the first secondary cell based on frequency interference information measured by the pRRU comprises generating, by the convergence node, the frequency information of the first secondary cell based on the frequency interference information measured by the pRRU, a topological relationship between pRRUs, and a mapping relationship between the pRRUs and cells, wherein the cell comprises the first secondary cell and a target primary cell; wherein the topology relationship between the pRRUs is a topological relationship between a plurality of pRRUs on which the first unlicensed carrier is located; wherein the mapping relationship between the pRRUs and the cells is a secondary cell and a primary cell to which each pRRU is mapped; and
sending (403), by the convergence node, cell information of the first secondary cell to a base band unit, BBU, of the BBU set wherein the cell information comprises the frequency information of the first secondary cell, and the BBU corresponds to the target primary cell using a licensed carrier, and wherein the cell information of the first secondary cell is used by the BBU to configure the first secondary cell using the first unlicensed carrier;
wherein before the sending, by the convergence node, cell information of the first secondary cell to the BBU, the method further comprises:
determining, by the convergence node based on an unlicensed carrier allocation proportion required by a principle of performing sharing by using different carriers, a BBU set to which the first unlicensed carrier is allocated;
determining, by the convergence node from a plurality of primary cells corresponding to the BBU set to which the first unlicensed carrier is allocated, a primary cell having an overlapping coverage area with the first secondary cell as the target primary cell;
determining, by the convergence node, the BBU based on the target primary cell; and
determining, by the convergence node, the target primary cell comprising determining based on a carrier allocation proportion between the different operators, an operator to which the first secondary cell is allocated, and wherein a primary cell that has the overlapping coverage area with the first secondary cell and that is selected from a plurality of primary cells corresponding to the BBU set is the target primary cell.

2. The method according to claim 1, wherein the generating, by the convergence node, the frequency information of the first secondary cell based on the frequency interference information measured by the pRRU, a topological relationship between pRRUs, and a mapping relationship between the pRRUs and cells comprises:
receiving, by the convergence node, frequency measurement results respectively reported by M pRRUs, wherein the frequency measurement results are information generated after each pRRU performs interference measurement on N frequencies, and M and N are positive integers;
selecting, by the convergence node from the N frequencies, based on the frequency measurement results, the topological relationship, and the mapping relationship, a frequency of which an interference value is less than an interference threshold as the first frequency, wherein the interference threshold is determined by using a smallest interference value in the N frequencies; and
generating, by the convergence node, the frequency information of the first secondary cell based on the selected first frequency.

3. The method according to claim 2, wherein the selecting, by the convergence node from the N frequencies, based on the frequency measurement results, the topological relationship, and the mapping relationship, a frequency of which an interference value is less than an interference threshold as the first frequency comprises:
selecting, by the convergence node from the N frequencies, a frequency of which the interference value is less than the interference threshold and of which a quantity of frequencies of an unlicensed carrier in the target primary cell is less than a threshold of the quantity of frequencies as the first frequency.

4. The method according to claim 1, wherein the deploying, by a convergence node, a first secondary cell using a first unlicensed carrier comprises:
obtaining, by the convergence node, region information of a secondary cell; and
creating, by the convergence node based on the region information of the secondary cell, the first secondary cell using the first unlicensed carrier.

5. A convergence node (800), wherein the convergence node comprises a processor (803) and a memory (804), and the processor (803) and the memory (804) communicate with each other;
the memory (804) is configured to store an instruction; and
the processor (803) is configured to execute the instruction in the memory, to perform the method according to any one of claims 1 to 4.

6. A computer-readable storage medium, comprising an instruction, wherein when the instruction is run on a processor of a convergence node, the convergence node is enabled to perform the method according to any one of claims 1 to 4.

7. A computer program product comprising an instruction, wherein when the instruction is run on a processor of a convergence node, the convergence node is enabled to perform the method according to any one of claims 1 to 4.

## Patentansprüche

1. Verfahren zur unlizenzierten Trägerverarbeitung, umfassend:
Bereitstellen (401), durch einen Konvergenzknoten, einer ersten Sekundärzelle unter Verwendung eines ersten unlizenzierten Trägers, wobei die erste Sekundärzelle auf dem Konvergenzknoten bereitgestellt wird, wobei ein Bereitstellungsort des ersten unlizenzierten Trägers auf dem Konvergenzknoten angeordnet ist, wobei der Konvergenzknoten mit jeder Basisbandeinheit, BBU, eines BBU-Satzes verbunden ist und wobei jede BBU einem anderen Betreiber gehört;
Erzeugen (402), durch den Konvergenzknoten, von Frequenzinformationen der ersten Sekundärzelle basierend auf Frequenzinterferenzinformationen, die von einer Pico-Remote-Radio-Unit, pRRU, gemessen und empfangen werden, wobei die Frequenzinformationen eine erste Frequenz umfassen, die dem ersten unlizenzierten Träger entspricht und die durch den Konvergenzknoten für die erste Sekundärzelle ausgewählt wird, und wobei die pRRU unter Verwendung eines Remote-Radio-Unit-Hubs, RHUB, mit dem Konvergenzknoten verbunden ist, wobei das Erzeugen, durch den Konvergenzknoten, von Frequenzinformationen der ersten Sekundärzelle basierend auf Frequenzinterferenzinformationen, die durch die pRRU gemessen werden, Erzeugen, durch den Konvergenzknoten, der Frequenzinformationen der ersten Sekundärzelle basierend auf den Frequenzinterferenzinformationen, die durch die pRRU gemessen werden, einer topologischen Beziehung zwischen pRRUs und einer Zuordnungsbeziehung zwischen den pRRUs und Zellen umfasst, wobei die Zelle die erste Sekundärzelle und eine Zielprimärzelle umfasst; wobei die topologische Beziehung zwischen den pRRUs eine topologische Beziehung zwischen einer Vielzahl von pRRUs ist, auf der sich der erste unlizenzierte Träger befindet; wobei die Zuordnungsbeziehung zwischen den pRRUs und den Zellen eine Sekundärzelle und eine Primärzelle ist, denen jede pRRU zugeordnet ist; und
Senden (403), durch den Konvergenzknoten, von Zellinformationen der ersten Sekundärzelle an eine Basisbandeinheit, BBU, des BBU-Satzes, wobei die Zellinformationen die Frequenzinformationen der ersten Sekundärzelle umfassen und die BBU der Zielprimärzelle entspricht, die einen lizenzierten Träger verwendet, und wobei die Zellinformationen der ersten Sekundärzelle durch die BBU dazu verwendet werden, die erste Sekundärzelle unter Verwendung des ersten unlizenzierten Trägers zu konfigurieren;
wobei vor dem Senden, durch den Konvergenzknoten, von Zellinformationen der ersten Sekundärzelle an die BBU das Verfahren ferner Folgendes umfasst:
Bestimmen, durch den Konvergenzknoten basierend auf einem Zuweisungsverhältnis unlizenzierter Träger, das gemäß einem Prinzip eines Durchführens gemeinsamer Nutzung unter Verwendung unterschiedlicher Träger erforderlich ist, eines BBU-Satzes, dem der erste unlizenzierte Träger zugewiesen ist;
Bestimmen, durch den Konvergenzknoten aus einer Vielzahl von Primärzellen, die dem BBU-Satz entspricht, dem der erste unlizenzierte Träger zugewiesen ist, einer Primärzelle, die einen überlappenden Abdeckungsbereich mit der ersten Sekundärzelle aufweist, als die Zielprimärzelle;
Bestimmen, durch den Konvergenzknoten, der BBU basierend auf der Zielprimärzelle; und
Bestimmen, durch den Konvergenzknoten, der Zielprimärzelle, umfassend Bestimmen, basierend auf einem Trägerzuweisungsverhältnis zwischen den unterschiedlichen Betreibern, eines Betreibers, dem die erste Sekundärzelle zugewiesen ist, und wobei eine Primärzelle, die den überlappenden Abdeckungsbereich mit der ersten Sekundärzelle aufweist und die aus einer Vielzahl von Primärzellen, die dem BBU-Satz entspricht, ausgewählt ist, die Zielprimärzelle ist.

2. Verfahren nach Anspruch 1, wobei das Erzeugen, durch den Konvergenzknoten, der Frequenzinformationen der ersten Sekundärzelle basierend auf den Frequenzinterferenzinformationen, die durch die pRRU gemessen werden, einer topologischen Beziehung zwischen pRRUs und einer Zuordnungsbeziehung zwischen den pRRUs und Zellen Folgendes umfasst:
Empfangen, durch den Konvergenzknoten, von Frequenzmessergebnissen, die jeweils durch M pRRUs gemeldet werden, wobei die Frequenzmessergebnisse Informationen sind, die erzeugt werden, nachdem jede pRRU eine Interferenzmessung auf N Frequenzen durchführt, und M und N positive Ganzzahlen sind;
Auswählen, durch den Konvergenzknoten aus den N Frequenzen basierend auf den Frequenzmessergebnissen, der topologischen Beziehung und der Zuordnungsbeziehung, einer Frequenz, von der ein Interferenzwert geringer als ein Interferenzschwellenwert ist, als die erste Frequenz, wobei der Interferenzschwellenwert unter Verwendung eines geringsten Interferenzwerts in den N Frequenzen bestimmt wird; und
Erzeugen, durch den Konvergenzknoten, der Frequenzinformationen der ersten Sekundärzelle basierend auf der ausgewählten ersten Frequenz.

3. Verfahren nach Anspruch 2, wobei das Auswählen, durch den Konvergenzknoten aus den N Frequenzen basierend auf den Frequenzmessergebnissen, der topologischen Beziehung und der Zuordnungsbeziehung, einer Frequenz, von der ein Interferenzwert geringer als ein Interferenzschwellenwert ist, als die erste Frequenz Folgendes umfasst:
Auswählen, durch den Konvergenzknoten aus den N Frequenzen, einer Frequenz, deren Interferenzwert geringer als der Interferenzschwellenwert ist und von der eine Anzahl von Frequenzen eines unlizenzierten Trägers in der Zielprimärzelle geringer als ein Schwellenwert der Anzahl von Frequenzen ist, als die erste Frequenz.

4. Verfahren nach Anspruch 1, wobei das Bereitstellen, durch einen Konvergenzknoten, einer ersten Sekundärzelle unter Verwendung eines ersten unlizenzierten Trägers Folgendes umfasst:
Erlangen, durch den Konvergenzknoten, von Regionsinformationen einer Sekundärzelle; und
Erstellen, durch den Konvergenzknoten basierend auf den Regionsinformationen der Sekundärzelle, der ersten Sekundärzelle unter Verwendung des ersten unlizenzierten Trägers.

5. Konvergenzknoten (800), wobei der Konvergenzknoten einen Prozessor (803) und einen Speicher (804) umfasst und der Prozessor (803) und der Speicher (804) miteinander kommunizieren;
der Speicher (804) dazu konfiguriert ist, eine Anweisung zu speichern; und
der Prozessor (803) dazu konfiguriert ist, die Anweisung in dem Speicher dazu auszuführen, das Verfahren nach einem der Ansprüche 1 bis 4 durchzuführen.

6. Computerlesbares Speichermedium, umfassend eine Anweisung, wobei, wenn die Anweisung auf einem Prozessor eines Konvergenzknotens ausgeführt wird, dem Konvergenzknoten ermöglicht wird, das Verfahren nach einem der Ansprüche 1 bis 4 durchzuführen.

7. Computerprogrammprodukt, umfassend eine Anweisung, wobei, wenn die Anweisung auf einem Prozessor eines Konvergenzknotens ausgeführt wird, dem Konvergenzknoten ermöglicht wird, das Verfahren nach einem der Ansprüche 1 bis 4 durchzuführen.

## Revendications

1. Procédé de traitement de porteuse sans licence, comprenant :
le déploiement (401), par un noeud de convergence, d'une première cellule secondaire utilisant une première porteuse sans licence, dans lequel la première cellule secondaire est déployée sur le noeud de convergence, dans lequel un emplacement de déploiement de la première porteuse sans licence est disposé sur le noeud de convergence, dans lequel le noeud de convergence est connecté à chaque unité de bande de base, BBU, d'un ensemble BBU, et dans lequel chaque BBU appartient à un opérateur différent ;
la génération (402), par le noeud de convergence, d'informations de fréquence de la première cellule secondaire sur la base d'informations d'interférence de fréquence mesurées par et reçues d'une pico-unité radio distante, pRRU, dans lequel les informations de fréquence comprennent une première fréquence qui correspond à la première porteuse sans licence et qui est sélectionnée par le noeud de convergence pour la première cellule secondaire, et dans lequel la pRRU est connectée au noeud de convergence à l'aide d'un hub d'unité radio distante, RHUB, dans lequel la génération, par le noeud de convergence, d'informations de fréquence de la première cellule secondaire est basée sur les informations d'interférence de fréquence mesurées par la pRRU, comprend la génération, par le noeud de convergence, des informations de fréquence de la première cellule secondaire sur la base des informations d'interférence de fréquence mesurées par la pRRU, d'une relation topologique entre des pRRU et d'une relation de mappage entre les pRRU et les cellules, dans lequel la cellule comprend la première cellule secondaire et une cellule primaire cible ; dans lequel la relation topologique entre les pRRU est une relation topologique entre une pluralité de pRRU sur lesquelles se trouve la première porteuse sans licence ; dans lequel la relation de mappage entre les pRRU et les cellules est une cellule secondaire et une cellule primaire sur lesquelles chaque pRRU est mappée ; et
l'envoi (403), par le noeud de convergence, d'informations de cellule de la première cellule secondaire à une unité de bande de base, BBU, de l'ensemble BBU, dans lequel les informations de cellule comprennent les informations de fréquence de la première cellule secondaire, et la BBU correspond à la cellule primaire cible utilisant une porteuse sous licence, et dans lequel les informations de cellule de la première cellule secondaire sont utilisées par la BBU pour configurer la première cellule secondaire utilisant la première porteuse sans licence ;
dans lequel avant l'envoi, par le noeud de convergence, d'informations de cellule de la première cellule secondaire à la BBU, le procédé comprend également :
la détermination, par le noeud de convergence sur la base d'une proportion d'attribution de porteuse sans licence requise par un principe d'exécution de partage à l'aide de différentes porteuses, d'un ensemble BBU auquel la première porteuse sans licence est attribuée ;
la détermination, par le noeud de convergence, parmi une pluralité de cellules primaires correspondant à l'ensemble BBU auquel la première porteuse sans licence est attribuée, d'une cellule primaire ayant une zone de couverture chevauchante avec la première cellule secondaire en tant que cellule primaire cible ;
la détermination, par le noeud de convergence, de la BBU sur la base de la cellule primaire cible ; et
la détermination, par le noeud de convergence, de la cellule primaire cible comprenant la détermination, sur la base d'une proportion d'attribution de porteuse entre les différents opérateurs, d'un opérateur auquel la première cellule secondaire est attribuée, et dans lequel une cellule primaire qui présente la zone de couverture chevauchante avec la première cellule secondaire et qui est sélectionnée parmi une pluralité de cellules primaires correspondant à l'ensemble BBU constitue la cellule primaire cible.

2. Procédé selon la revendication 1, dans lequel la génération, par le noeud de convergence, des informations de fréquence de la première cellule secondaire sur la base des informations d'interférence de fréquence mesurées par la pRRU, d'une relation topologique entre des pRRU et d'une relation de mappage entre les pRRU et des cellules comprend :
la réception, par le noeud de convergence, de résultats de mesure de fréquence rapportés respectivement par M pRRU, dans lequel les résultats de mesure de fréquence sont des informations générées après que chaque pRRU a exécuté une mesure d'interférence sur N fréquences, et M et N sont des nombres entiers positifs ;
la sélection, par le noeud de convergence parmi les N fréquences, sur la base des résultats de mesure de fréquence, de la relation topologique et de la relation de mappage, d'une fréquence dont une valeur d'interférence est inférieure à un seuil d'interférence en tant que première fréquence, dans lequel le seuil d'interférence est déterminé à l'aide d'une plus petite valeur d'interférence dans les N fréquences ; et
la génération, par le noeud de convergence, des informations de fréquence de la première cellule secondaire sur la base de la première fréquence sélectionnée.

3. Procédé selon la revendication 2, dans lequel la sélection, par le noeud de convergence parmi les N fréquences, sur la base des résultats de mesure de fréquence, de la relation topologique et de la relation de mappage, d'une fréquence dont une valeur d'interférence est inférieure à un seuil d'interférence en tant que première fréquence comprend :
la sélection, par le noeud de convergence parmi les N fréquences, d'une fréquence dont la valeur d'interférence est inférieure au seuil d'interférence et dont une quantité de fréquences d'une porteuse sans licence dans la cellule primaire cible est inférieure à un seuil de la quantité de fréquences en tant que première fréquence.

4. Procédé selon la revendication 1, dans lequel le déploiement, par un noeud de convergence, d'une première cellule secondaire utilisant une première porteuse sans licence comprend :
l'obtention, par le noeud de convergence, d'informations de région d'une cellule secondaire ; et
la création, par le noeud de convergence sur la base des informations de région de la cellule secondaire, de la première cellule secondaire utilisant la première porteuse sans licence.

5. Noeud de convergence (800), dans lequel le noeud de convergence comprend un processeur (803) et une mémoire (804), et le processeur (803) et la mémoire (804) communiquent l'un avec l'autre ;
la mémoire (804) est configurée pour stocker une instruction ; et le processeur (803) est configuré pour exécuter l'instruction dans la mémoire, pour exécuter le procédé selon l'une quelconque des revendications 1 à 4.

6. Support de stockage lisible par ordinateur, comprenant une instruction, dans lequel lorsque l'instruction est exécutée sur un processeur d'un noeud de convergence, le noeud de convergence est activé pour exécuter le procédé selon l'une quelconque des revendications 1 à 4.

7. Produit de programme informatique comprenant une instruction, dans lequel lorsque l'instruction est exécutée sur un processeur d'un noeud de convergence, le noeud de convergence est activé pour exécuter le procédé selon l'une quelconque des revendications 1 à 4.
